# EUROPEAN PATENT SPECIFICATION

(11) **EP 2 632 863 B1**
(45) Date of publication and mention of the grant of the patent: **11.05.2016**
(21) Application number: 11770952.7
(22) Date of filing: 29.09.2011
(51) Int. Cl.: C02F 11/08, C22B 3/16, C02F 1/28, C02F 1/42, C02F 1/56, C02F 101/20

(54) **WASTE TREATMENT PROCESS**
ABFALLBEARBEITUNGSVERFAHREN
PROCÉDÉ DE TRAITEMENT DE DÉCHETS

(30) Priority: 30.09.2010 US 388164 P
(43) Date of publication of application: 04.09.2013
(73) Proprietor: Earth Renewal Group, Llc, Salt Lake City, Utah 84124 (US)
(72) Inventor: KESLER, Frederick P., Salt Lake City Utah 84124 (US); FOSTER, George G., Salt Lake City Utah 84124 (US); COMP, Shannon, Cedar City, UT 84720 (US); DRAPER, Malcolm, New York New York 10023 (US)
(74) Representative: Evens, Paul Jonathan
(86) International application number: PCT/US2011/054075
(87) International publication number: WO 2012/044858

(56) References cited:
- WO-A1-94/17216
- JP-A- 5 293 496
- US-A- 4 277 342
- US-A- 5 051 191
- US-A- 5 236 492
- Kenichi SATOH,Tetsuya KOBAYASHI,Ryozo TAMURA,Takao TAMURA and Fumio SHIRAI: Kankyo Gijutsu (Journal of Environmental Engineering), vol. 15, no. 10 1986, pages 813-817, XP002665956, Japan Retrieved from the Internet: URL:http://www.journalarchive.jst.go.jp/jn lpdf.php?cdjournal=jriet1972&cdvol=15&nois sue=10&startpage=813&lang=en&from=jnltoc [retrieved on 2011-12-16]

## Description

The present invention relates to a method of treating a feedstock that includes organic material.

### BACKGROUND

Modem civilization produces a large quantity of organic waste. It originates from household, commercial, institutional, and industrial waste and can include materials such as sewage sludge, animal manure, potato skins, slaughterhouse runoff, and so forth.

One of the biggest sources of organic waste is sewage material. Sewage material refers broadly to sewage sludge, dewatered sewage, animal waste, lagoon sludge, and the like. Sewage material is most commonly produced by wastewater treatment processes such as those used in municipal sewage treatment plants, large scale animal production facilities, and the like.

Sewage material contains valuable nutrients making it desirable to transform the sewage material into a safe and effective fertilizer. This produces tremendous environmental benefits by turning a ubiquitous waste material into a valuable resource. If the sewage material is not transformed into fertilizer or some other valuable product, it must instead by disposed of in less desirable ways such as incinerating it or disposing of it in a landfill, lagoon, or the ocean.

Unfortunately, there are a number of obstacles that have prevented the widespread use of sewage material for fertilizer. One of the biggest obstacles is the presence of toxic materials in the fertilizer such as heavy metals, pathogens, drug residues, and the like. These materials originate with the sewage material and are difficult to remove when it is processed to make fertilizer. Other obstacles include the potential for applying too much or too little of each nutrient and the possible detrimental effects on water quality from leaching, erosion, or runoff losses.

Regulatory restrictions have been placed on the use of fertilizer derived from sewage material due to these obstacles. There are restrictions that prevent the fertilizer from being used on land that exceeds a certain slope or has certain soil conditions. There are restrictions on how close it can be applied to homes, wells, streams, roads, and property lines. There are also restrictions that limit the quantity of heavy metals (arsenic, cadmium, chromium, cobalt, copper, mercury, molybdenum, nickel, lead, selenium, and zinc) that can be applied to a given area. Once these limits are reached, no more fertilizer can be added, but the land can still be used for normal crop production.

Numerous attempts have been made over the years to develop a process to dispose of organic waste materials in an effective and cost efficient manner. Unfortunately, most of these processes consume large amounts of energy, emit noxious gases, and rarely achieve the desired conversion rate.

An earlier process oxidized the waste material in a solution of nitric and sulfuric acid. The reaction occurred in a pressurized reactor that was maintained at a temperature of no more than 210 °C. Oxygen gas was added to facilitate the reaction and breakdown of the waste material.

The process successfully transformed the waste material into materials such as oxygen, nitrogen, water, carbon dioxide, and so forth. However, the solution included a high concentration of nitric and sulfuric acid and much of it was consumed in the process. This made the economics of the process challenging since the process consumed large amounts of relatively expensive acid and produced mostly low value end products.

US-A-4,277,342 discloses a process for the combined biological-chemical detoxification of a municipal sewage sludge. The process involves aerobic autoheated thermophilic digestion of the sludge in a reactor at temperatures of between 43°C and 70°C, followed by acidification with a concentrated acid such as sulfuric acid whilst the temperature is maintained. A number of embodiments of an improved process for eliminating waste material or transforming it into a commercially valuable end product are described below. The process is especially suited for converting sewage materials into fertilizer. The process reduces or eliminates many of the problems and disadvantages associated with conventional processes.

### SUMMARY

In accordance with the present invention, there is provided a method for treating a feedstock that includes organic material as defined in claim 1. Preferred embodiments of the process are defined in claims dependent on claim 1. A number of representative embodiments are provided to illustrate the various features, characteristics, and advantages of the waste treatment process. The embodiments are provided primarily in the context of treating sewage material. It should be understood, however, that many of the concepts may be used in a variety of other settings, situations, and configurations. For example, the features, characteristics, advantages, etc., of one embodiment can be used alone or in various combinations and subcombinations with one another.

A process for treating a feedstock that includes organic material is disclosed. The process may be used to treat any organic feedstock, but is especially suitable for treating sewage material and transforming it into fertilizer and/or biofuel. In one embodiment, the process is used to treat municipal and/or farm waste such as dewatered sewage, municipal sludge cake, or animal manure. In another embodiment, the process is used to treat food waste such as potato skins, produce waste, and the like.

The feedstock is oxidized in an aqueous reaction mixture by oxidizing acids. The oxidizing acids are supplied in an amount that is sufficient to oxidize the feedstock and produce the desired reaction products. In one embodiment, the feedstock and the oxidizing acid are part of a reaction mixture that includes no more than approximately 7.5 wt% oxidizing acid. The reaction mixture can also have a pH of approximately 0.5 to 2.0. The reaction mixture includes sulfuric acid and nitric acid as oxidizing acids.

The feedstock can be processed before being fed to the reactor to give it uniform physical properties and to make it better suited to be rapidly and efficiently oxidized. This may include comminuting the feedstock so that the particles have a uniform size that allows the feedstock to easily enter the reactor, combining the feedstock with recycled effluent from the reactor, and/or combining the feedstock with one or more oxidizing acids before the feedstock enters the reactor.

Oxygen gas is supplied to the reactor to facilitate oxidation of the feedstock and may be to reoxidize the reduction products of the oxidizing acid thereby regenerating the acid in situ. The oxygen gas may be added to the headspace of the reactor, bubbled into the liquid, or added in any other suitable manner. The reactor may be maintained at suitable pressures and temperatures to facilitate regeneration of the oxidizing acid.

The gas in the headspace of the reactor may be dispersed into the reaction mixture. This prevents oxygen gas from accumulating in the headspace. In one embodiment, this is accomplished using an impeller that propels the gas from the headspace into the reaction mixture as the impeller rotates. The result is that the composition of the gas in the reaction mixture is close to or the same as the composition of the gas in the headspace. In particular, the concentration of oxygen gas in the dissolved and entrained gas portion of the reaction mixture is similar, if not the same, as the concentration of oxygen gas in the headspace. The reaction mixture may be mixed vigorously to increase the total amount of oxygen gas in the mixture.

The process produces a runny effluent having a solid fraction (or solid component) and a liquid fraction (or liquid component). The solid fraction is 2 to 10 wt% of the effluent and the liquid fraction is the rest. The hydrocarbon material in the solid fraction may include at least 25 wt% fatty acid esters, at least 50 wt% fatty acid esters, or at least 75 wt% fatty acid esters. The fatty acid esters can be mono-alkyl esters of long chain fatty acids. The weight ratio of carbon to nitrogen in the solid fraction, on a dry basis, is more than two times the weight ratio of carbon to nitrogen in the liquid fraction.

The effluent exits the reactor and is cooled. The pressure is also reduced and dissolved gas separates. The effluent can be vigorously agitated to speed up the separation and make it more complete. The solids are separated from the effluent and a portion of the liquid fraction is recycled back to the beginning of the process and combined with the feedstock as mentioned above.

The liquid fraction of the effluent may contain heavy metals, especially if sewage material is the feedstock. The heavy metals can be separated in a variety of ways. One way is to allow the liquid fraction to sit undisturbed for a sufficient period of time for the heavy metals to precipitate out of the solution. The remaining liquid can be drawn off the top and mixed with ammonia to produce liquid fertilizer. Another way is to remove the heavy metals with an ion exchange material.

The solid fraction may also include heavy metals. These can be removed using a variety of techniques. For example, the heavy metals can be removed from the liquid fraction and the resulting liquid can be used as a solvent to extract the heavy metals from the solid effluent. The heavy metals can then be separated from the liquid by precipitation.

It should be appreciated that all pressures referred to herein are gauge pressures unless stated otherwise. Also, all references to molarity are given at standard conditions for temperature and pressure - i.e., 0 °C and 101.325 kPa - unless stated otherwise.

The foregoing and other features, utilities, and advantages of the subject matter described herein will be apparent from the following more particular description of certain embodiments as illustrated in the accompanying drawings.

The Summary is provided to introduce a selection of concepts in a simplified form that are further described below in the Detailed Description. The Summary and the Background are not intended to identify key concepts or essential aspects of the disclosed subject matter, nor should they be used to constrict or limit the scope of the claims. For example, the scope of the claims should not be limited based on whether the recited subject matter includes any or all aspects noted in the Summary and/or addresses any of the issues noted in the Background.

### DRAWINGS

The preferred and other embodiments are disclosed in association with the accompanying drawings in which:
Figure 1 is a block diagram of one embodiment of a process for oxidizing an organic feedstock that includes a feedstock processing system, a reaction system, and an effluent processing system.
Figure 2 is a block diagram of one embodiment of the feedstock processing system from Figure 1.
Figure 3 is a block diagram of another embodiment of the feedstock processing system from Figure 1.
Figure 4 is a block diagram of one embodiment of the reaction system from Figure 1.
Figure 5 is a block diagram of one embodiment of the effluent processing system from Figure 1.

### DETAILED DESCRIPTION

The process described herein, in its various embodiments, can be used to oxidize a wide variety of materials. The process is especially suited for oxidizing organic materials such as sewage materials and food waste, but it can also be used to oxidize other materials as well. Specific materials that may be oxidized using this process include, but are not limited to, food waste and municipal and farm waste including dewatered sewage, municipal sludge cake and animal manure.

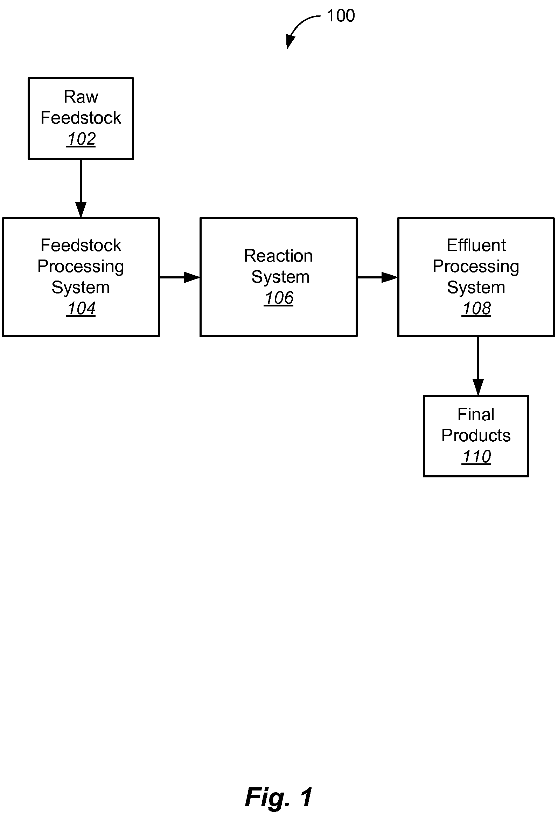

Referring to Figure 1, a block diagram of an improved aqueous phase oxidation process 100 is shown. The process 100 includes a feedstock processing system 104, a reaction system 106, and an effluent processing system 108. The sewage material 102 enters the feedstock processing system 104 where it is modified and/or processed to produce a primary feedstock. The primary feedstock is fed to the reaction system 106 where it is oxidized. The effluent from the reaction system 106 enters the effluent processing system 108 where it is separated and/or otherwise processed to produce final products 110. Each system 104, 106, 108 is described in greater detail.

The improved process is conceptually divided into the three systems 104, 106, 108 only for the purpose of describing it. It should be appreciated that the dividing line between each system 104, 106, 108 is somewhat arbitrary and does not represent a hard and fast boundary. Indeed, various components of one system could just as easily be considered part of a different system. With this in mind, the three systems 104, 106, 108 should be viewed as nothing more than a conceptual framework from which to describe the overall operation of the process.

The sewage material 102 can be supplied in any of a number of different forms. For example, it may be supplied as a slurry or bulk solids. In one embodiment, the sewage material is supplied as a readily pourable liquid that includes approximately 2 to 10 wt% solids (e.g., approximately 5 wt% solids).

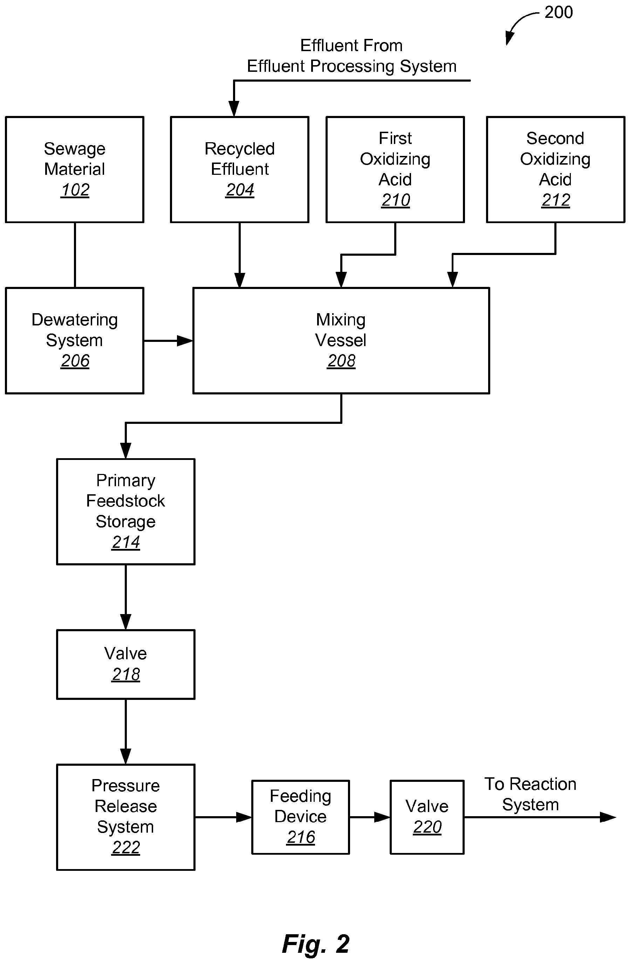

Figure 2 shows a block diagram of one embodiment of a feedstock processing system 200. The sewage material 102 passes through a dewatering system 206 to produce a dewatered feedstock. The dewatering system 206 is used to reduce the water content of the sewage material 102. This may be accomplished in any of a number of ways.

In one embodiment, a flocculant is mixed with the sewage material 102 causing the solids to clump together. The solids can then be separated using any suitable separation device or technique. In another embodiment, the sewage material 102 is dewatered without the use of a flocculant.

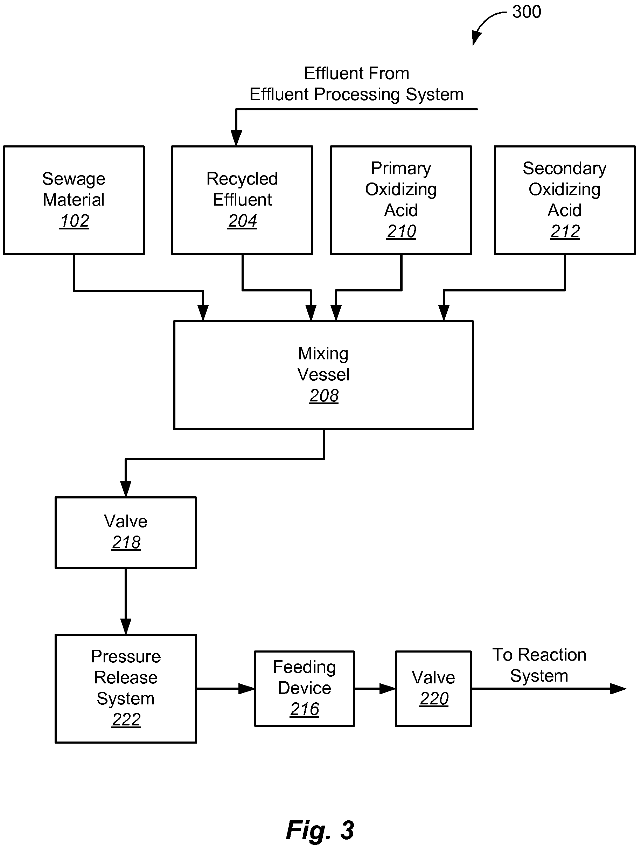

Additional examples of suitable techniques and devices for dewatering the sewage material 102 include evaporation in a lagoon or sand drying bed or mechanical separation using a rotary drum vacuum filter, centrifuge, belt filter press, plate and frame press, or vacuum dewatering bed. It should be appreciated that it is not required to dewater the sewage material 102. In some embodiments, such as the one shown in Fig. 3, the sewage material 102 may not undergo dewatering.

The dewatered feedstock is mixed with recycled effluent 204, a first oxidizing acid 210, and, optionally, a second oxidizing acid 212 in a mixing vessel 208 to produce a primary feedstock. The amount of recycled effluent 204 and/or oxidizing acids 210, 212 added to the mixing vessel 208 should be sufficient to create a slurry that doesn't plug or clog the equipment and/or facilitates later processing and transport.

The amount of recycled effluent 204 added may vary depending on the characteristics of the sewage material 102. Generally, larger quantities of the recycled effluent 204 are used if the sewage material 102 is dry, while smaller quantities, or possibly none at all, may be used if the sewage material 102 already includes a suitable amount of liquid. In one embodiment, the weight ratio of the recycled effluent 204 to the sewage material 102 in the mixing vessel 208 is approximately 1.5 to 4 or, desirably, approximately 2 to 3.

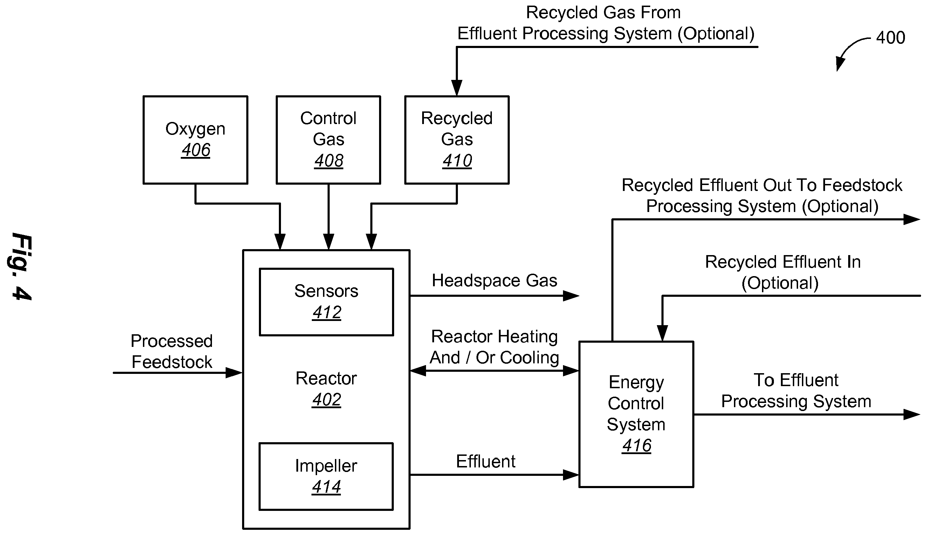

The recycled effluent 204 can be supplied at an elevated temperature to heat the sewage material 102 when the two are mixed together. The effluent from reactor 402 (Figure 4) is heated by the exothermic oxidation of the feedstock and/or by a heater that is part of the reactor 402. The recycled effluent 204 may be at an elevated temperature simply because it has not cooled (either naturally or actively cooled) after leaving the reactor 402. The recycled effluent 204 may also be heated in a heat exchanger to keep it at an elevated temperature.

In one example, described in greater detail below, the recycled effluent 204 and/or the primary feedstock is heated in a heat exchanger using heat from the effluent that has just left the reactor 402. The recycled effluent 204 may be stored in an insulated tank or vessel before being mixed with the sewage material 102 to maintain it at an elevated temperature. The resulting feedstock may be significantly above ambient temperature. In one embodiment, the recycled effluent 204 is supplied at a temperature of approximately 40 °C to 90 °C or, desirably, 50 °C to 75 °C. The primary feedstock can be approximately 37 °C to 50 °C.

The feedstock may be comminuted to reduce the size of the solid particles, improve the uniformity of the feedstock, and make the feedstock more amenable to evenly controlled pumping. This makes it easier to feed the feedstock into the reactor 402, which is often operated at an elevated pressure, without plugging the entry opening.

The size and uniformity of the feedstock are also important because the reaction rate can vary significantly based on these factors, especially particle size. Larger particles generally need longer residence times to sufficiently react. If the feedstock has both large and small particles, the large particles tend to dictate the residence time. Thus, it is desirable to create a feedstock that generally has small, uniform particles. This is especially true when the feedstock includes organic matter such as that contained in sewage material.

Increasing the reaction rate by comminuting the feedstock may also make it possible to reduce the size of the reactor 402 and/or increase the feed rate of the feedstock into the reactor 402. Either adjustment has a beneficial effect on the economics of the process 100.

The feedstock can be comminuted at any suitable location in the feed processing system 200. For example, the mixing vessel 208 can be configured to comminute the solid materials as it mixes the various materials together. The dewatered feedstock can also be comminuted in a separate vessel or grinder before entering the mixing vessel 208. Numerous variations are possible.

In one embodiment, the largest dimension of at least approximately 95% of the particles in the comminuted feedstock is no more than 7 mm, no more than 4 mm, no more than 2.5 mm, desirably, no more than 1.5 mm, or, suitably, no more than 0.5 mm. In another embodiment, the largest dimension of at least approximately 98% of the particles in the comminuted feedstock is no more than 7 mm, no more than 4 mm, no more than 2.5 mm, desirably, no more than 1.5 mm, or, suitably, no more than 0.5 mm. In yet another embodiment, the largest dimension of at least substantially all of the particles in the comminuted feedstock is no more than 7 mm, no more than 4 mm, no more than 2.5 mm, desirably, no more than 1.5 mm, or, suitably, no more than 0.5 mm.

The recycled effluent 204 and the acids 210, 212 are added to the feedstock before it enters the reactor 402. The amount of recycled effluent 204 added is just enough to lower the viscosity of the feedstock to allow it to be fed into the reactor 402. It has been found that pretreating the feedstock in this manner may increase the reaction rate in the reactor 402. The feedstock is preferably fed into the reactor 402 immediately after the recycled effluent 204 and the acids 210, 212 have been added. It should be appreciated that the feedstock may also be fed into the reactor without mixing it with the recycled effluent 204 and/or the acids 210, 212.

The first oxidizing acid 210 and the second oxidizing acid 212 are added to the mixing vessel 208 until the concentration of the acids 210, 212 in the primary feedstock, excluding solids (i.e., the concentration of the primary feedstock excluding the solids portion), is approximately the same as the concentration of the acids 210, 212, respectively, in the reactor 402 at start-up. In one embodiment, the acids 210, 212 are added until the pH of the primary feedstock is about 1.0. The feedstock is about neutral and the pH of the recycled effluent 204 is about 1.3 so enough acids 210, 212 are added to reach a final pH for the primary feedstock of about 1.0

The first oxidizing acid 210 is sulfuric acid, and the second oxidizing acid 212 is nitric acid. The acids function as the oxidizing agent to oxidize the feedstock. It is desirable to use more sulfuric acid than nitric acid. Sulfuric acid is a less aggressive oxidizing agent so it is less likely to over-react the feedstock and produce low value products. For example, a higher amount of sulfuric acid relative to nitric acid produces longer chain hydrocarbons and other valuable organic products, while a higher amount of nitric acid relative to sulfuric acid aggressively oxidizes the material and produces low value products such as carbon dioxide, water, nitrogen gas, etc. Sulfuric acid is also less expensive than nitric acid.

In one embodiment, the first oxidizing acid is added to achieve a concentration in the primary feedstock, excluding solids, of at least approximately 0.5 wt%, desirably, at least approximately 1 wt%, or, suitably, at least approximately 1.5 wt%.The first oxidizing acid is added to achieve a concentration in the primary feedstock, excluding solids, of no more than approximately 5 wt%, desirably, no more than approximately 3.5 wt%, or, suitably, no more than approximately 3 wt%. In yet another embodiment, the first oxidizing acid is added to achieve a concentration in the primary feedstock, excluding solids, of approximately 0.5 wt% to 5 wt%, desirably, approximately 1 wt% to 3.5 wt%, or, suitably, approximately 1.5 wt% to 3 wt%.

On a molar basis, in one embodiment, the first oxidizing acid is added to achieve a concentration in the primary feedstock, excluding solids, of at least approximately 0.052 mol/L, desirably, at least approximately 0.10 mol/L, or, suitably, at least approximately 0.16 mol/L. In another embodiment, the first oxidizing acid is added to achieve a concentration in the primary feedstock, excluding solids, of no more than approximately 0.52 mol/L, desirably, no more than approximately 0.36 mol/L, or, suitably, no more than approximately 0.31 mol/L. In yet another embodiment, the first oxidizing acid is added to achieve a concentration in the primary feedstock, excluding solids, of approximately 0.052 mol/L to 0.52 mol/L, desirably, approximately 0.10 mol/L to 0.36 mol/L, or, suitably, approximately 0.16 mol/L to 0.31 mol/L.

The second oxidizing acid is added to achieve a concentration in the primary feedstock, excluding solids, of at least approximately 0.05 wt%, desirably, at least approximately 0.1 wt%, at least approximately 0.5 wt% or at least approximately 1 wt%, and to achieve a concentration in the primary feedstock, excluding solids, of no more than approximately 5 wt%, desirably, no more than approximately 3 wt%, no more than approximately 2 wt%, or, suitably, no more than approximately 1 wt%. Thus, the second oxidizing acid may be added to achieve a concentration in the primary feedstock, excluding solids, of approximately 0.05 wt% to 5 wt%, desirably, approximately 0.1 wt% to 3 wt%, or, suitably, approximately 0.5 wt% to 2 wt%.

On a molar basis, in one embodiment, the second oxidizing acid is be added to achieve a concentration in the primary feedstock, excluding solids, of at least approximately 0.008 mol/L, at least approximately 0.016 mol/L, at least approximately 0.08 mol/L, or at least approximately 0.16 mol/L. In another embodiment, the second oxidizing acid may be added to achieve a concentration in the primary feedstock, excluding solids, of no more than approximately 0.80 mol/L, desirably, no more than approximately 0.48 mol/L, no more than approximately 0.32 mol/L, or, suitably, no more than approximately 0.0.16 mol/L. In yet another embodiment, the second oxidizing acid may be added to achieve a concentration in the primary feedstock, excluding solids, of approximately 0.008 mol/L to 0.80 mol/L, desirably, approximately 0.016 mol/L to 0.48 mol/L, or, suitably, approximately 0.08 mol/L to 0.32 mol/L.

The total amount of oxidizing acid in the primary feedstock can vary widely. In one embodiment, the total amount of acid in the primary feedstock, excluding solids, is at least approximately 0.3 wt%, desirably, at least approximately 0.5 wt%, or, suitably, at least approximately 1 wt%. In another embodiment, the total amount of acid in the primary feedstock, excluding solids, is no more than approximately 7.5 wt%, desirably, no more than approximately 5 wt%, no more than approximately 3 wt%, or, suitably, no more than approximately 2 wt%. In yet another embodiment, the total amount of acid in the primary feedstock, excluding solids, is approximately 0.3 wt% to 7.5 wt%, desirably, approximately 0.5 wt% to 5 wt%, or, suitably, approximately 1 wt% to 3 wt%.

Any ratio of the first oxidizing acid the second oxidizing acid can be used. In one embodiment, the ratio of first oxidizing acid to second oxidizing acid in the primary feedstock is at least approximately 0.5, at least approximately 1, at least approximately 2, desirably, at least approximately 3, or, suitably, at least approximately 4. In another embodiment, the second oxidizing acid may be eliminated entirely or additional acids may be added. For example, the process may be operated using only the first oxidizing acid.

The primary feedstock can have any suitable pH. In one embodiment, the pH of the primary feedstock is at least approximately 0.5, desirably, at least approximately 0.7, or, suitably, at least approximately 0.85. In another embodiment, the pH of the primary feedstock is no more than approximately 1.75, desirably, no more than approximately 1.5, or, suitably, no more than approximately 1.25. In another embodiment, the pH of the primary feedstock is approximately 0.5 to 1.75, desirably, approximately 0.7 to 1.5, or, suitably, approximately 0.85 to 1.25.

The mixing vessel 208 can be any suitable tank, pipe, or other vessel that is capable of holding and/or mixing the materials. The mixing vessel 208 should be made of a material that is chemically resistant to the acids 210, 212. Suitable materials include plastic, titanium and the like. In one embodiment, the mixing vessel 208 is a plastic lined steel vessel (e.g., carbon steel, stainless steel).

As shown in Figure 2, the primary feedstock exits the mixing vessel 208 and is stored in a storage vessel or tank 214 before it is fed into the reactor 402. In one embodiment, the storage vessel 214 is insulated to maintain the temperature of the primary feedstock and conserve energy. It should be noted that it is generally not desirable to store the primary feedstock for a long period of time before feeding it into the reactor 402. The presence of the acids 210, 212 may cause the primary feedstock to separate and the texture to change in a way that can make it difficult to feed into the reactor 402.

The primary feedstock is now prepared to be fed into the reactor 402. This is accomplished using one or more feeding devices 216. In one embodiment, the primary feedstock is transferred to the feeding device 216 via a low pressure pump and a combination of vacuum and gravity flow. It should be appreciated, however, that any suitable method can be used to transfer the primary feedstock to the feeding device 216.

In one embodiment, the feeding device 216 feeds the primary feedstock into the reactor 402 at a steady rate or approximately steady rate. Relatively minor fluctuations in the feed rate can cause large fluctuations in the reaction in certain situations. If the feed rate drops, the reactor 402 is starved and if the feed rate climbs, the reactor 402 is overfed.

The reaction may be, in some situations, more sensitive to feed rate fluctuations than to other parameters such as temperature and pressure. For this reason, it is desirable to tightly control the feed rate. However, this is not a simple matter since the reactor 402 can experience relatively large fluctuations in pressure and temperature. The pressure swings make it particularly difficult to feed the primary feedstock into the reactor 402 at a steady rate.

The feeding device 216 can have any suitable configuration that allows it to feed the primary feedstock at a steady rate. In one embodiment, the feeding device 216 is actuated or powered hydraulically. For example, the feeding device 216 may include one or more hydraulic rams that dispense or force the primary feedstock into the reactor 402. One example of a suitable hydraulically powered feeding device is a cycling ram pump.

The feeding device 216 can also be actuated or powered by a gearmotor. For example, the feeding device 216 includes a gearmotor that turns a screw which, in turn, feeds the primary feedstock into the reactor 402. The feeding device 216 can be configured so that pressure fluctuations in the reactor 402, even up to the reactor's safe operating pressure limit of approximately 13,800 kPa, do not significantly change the feed rate.

In one embodiment, the feeding device 216 is an extruder and/or injector that is hydraulically or gear actuated. Multiple feeding devices 216 may be used to provide an uninterrupted supply of the primary feedstock to the reactor 402. The multiple feeding devices 216 may be sequentially activated and refilled. When one feeding device 216 is injecting the feedstock into the reactor 402, another feeding device 216 may be refilled with the primary feedstock. Also, the use of multiple feeding devices 216 is advantageous because it allows one or more devices 216 to be offline for maintenance or repairs while the remainder of the devices 216 provide a continuous supply of feedstock to the reactor 402.

The feeding device 216 can feed the primary feedstock into the reactor at a rate that fluctuates no more than approximately 10% per hour, desirably, no more than approximately 5% per hour, or, suitably no more than approximately 2% per hour. In another embodiment, the feeding device 216 feeds the primary feedstock into the reactor at a feed rate that is approximately constant. The feeding device 216 is capable of maintaining the desired feed rate even though the pressure in the reactor 402 can vary from approximately 2070 kPa to 6,900 kPa.

The feeding device 216 is at atmospheric pressure when it is filled with the primary feedstock from the storage vessel 214 and is exposed to the high pressure of the reactor 402 when it is feeding the primary feedstock into the reactor 402. The valves 218, 220 may be used to selectively isolate the feeding device 216 from the reactor 402 during feeding and refilling operations. The valve 218 is closed and the valve 220 is open when the feeding device 216 injects the primary feedstock into the reactor 402. The valve 220 is closed and the valve 218 is open when the feeding device 216 is refilled with the primary feedstock.

The valves 218, 220 may also be used to isolate the feeding device 216 so that it can be repaired while the reactor 402 remains in operation. Moreover, the valves 218, 220 can also prevent backflow from the reactor 402 into the feedstock processing system 104 during an overpressure event. It should be appreciated that although the valves 218, 220 are depicted as being separate from the feeding device 216, the valves 218, 220 may be provided as integral components of the feeding device 216.

A pressure release system 222 may be provided that allows the feeding device 216 to transition from a high pressure state to a low pressure state without causing undue wear on the components and/or blowback into the mixing vessel 208 when the valve 218 is opened. In one embodiment, the pressure release system may include a tank that is capable of absorbing excess pressure.

In another embodiment, the feeding device 216 feeds the primary feedstock into the reactor 402 at a rate that is not steady, but fluctuates somewhat. For example, a single feeding device 216 may be used that is repeatedly refilled and activated. The reactor 402 only receives feedstock when the feeding device 216 is activated so that no feedstock enters the reactor 402 while the feeding device 216 is refilled. The refill time can be relatively short compared to the activation time to minimize the effect on the reaction.

It should be appreciated that the feedstock processing system 104 can be configured in a number of other ways besides what is shown in Figure 2. For example, Figure 3 shows a block diagram of another embodiment of a feedstock processing system 300. This embodiment is similar to the feedstock processing system 200 except that the sewage material 102 is not dewatered before entering the mixing vessel 208. Also, the primary feedstock is not stored in a separate storage vessel.

The feedstock processing system 300 may be used in a variety of situations such as where the sewage material 102 is sewage sludge or a bulk solid material. Also, the mixing vessel 208 can function as a storage vessel so that the primary feedstock is drawn from the mixing vessel 208 into the reactor 402. Numerous other changes to the feedstock processing system 104 are also contemplated.

Referring to Figure 4, a block diagram is shown of one embodiment of a reaction system 400. The reaction system 400 includes the reactor 402, which receives the processed feedstock from the feedstock processing system 104. The reactor 402 is in fluid communication with an oxygen gas source 406, a control gas source 408, and, optionally, a recycled gas source 410. The reactor 402 includes one or more sensors 412 and an impeller or dispersion device 414. The temperature of the reactor 402 is controlled by an energy control system 416.

The reactor 402 can have any suitable configuration and be made of any suitable material. The reactor 402 should be made of a material that is chemically resistant to the acids 210, 212 and capable of withstanding high pressures. Suitable materials include plastic, titanium and the like. In one embodiment, the reactor 402 may be a plastic lined steel vessel (e.g., carbon steel, stainless steel). The reactor 402 can be any suitable size that is capable of accommodating the desired throughput.

At start-up, the reactor 402 is initially charged with an initial reaction mixture that includes an aqueous solution of the first oxidizing acid and the second oxidizing acid. In one embodiment, the first oxidizing acid is sulfuric acid and the second oxidizing acid is nitric acid. The reactor 402 may be initially charged with an aqueous mixture of sulfuric and nitric acid having any of the concentrations described above.

The reactor 402 can be filled to any suitable level with the initial reaction mixture. In one embodiment, the initial reaction mixture occupies at least approximately 25% of the volume of the reactor 402 or, suitably, at least approximately 35% of the volume of the reactor 402. In another embodiment, the initial reaction mixture occupies no more than approximately 80% of the volume of the reactor 402 or, suitably, no more than approximately 70% of the volume of the reactor 402. In yet another embodiment, the initial reaction mixture occupies approximately 25% to 80% of the volume of the reactor 402 or, suitably, approximately 35% to 70% of the volume of the reactor 402. Preferably, the initial reaction mixture occupies approximately 50% of the volume of the reactor 402. In any of these embodiments, the remainder of the volume of the reactor 402, i.e., the headspace, is occupied by gases.

The headspace is initially charged with oxygen gas and/or one or more other gases, preferably inert gases. The oxygen gas facilitates oxidation of the feedstock and/or regeneration of the nitric acid in the reaction mixture as described in greater detail below. The oxygen gas 406 may be supplied from any suitable source. For example, the oxygen source can come from air, pure or substantially pure oxygen gas, or even the product of another reaction.

In one embodiment, the amount of oxygen gas in the headspace at start-up is at least approximately 2 volume percent, desirably, at least approximately 5 volume percent, or, suitably, at least approximately 8 volume percent. In another embodiment, the amount of oxygen gas in the headspace at start-up is no more than approximately 80 volume percent, desirably, no more than approximately 60 volume percent, or, suitably, no more than approximately 55 volume percent. In yet another embodiment, the amount of oxygen gas in the headspace at start-up is approximately 2 to 80 volume percent, desirably, 5 to 60 volume percent, or, suitably, 8 to 55 volume percent.

The headspace can also be charged with other gases that are inert or otherwise unable to adversely affect the redox reaction. Suitable gases include nitrogen, argon, and the like. In one embodiment, the headspace is charged with air, which includes a mixture of nitrogen, oxygen, and other gases. These gases are supplied as the control gas 408 in Figure 4.

At start-up, the temperature and pressure are increased together until operating conditions are reached. For example, when the temperature reaches 60 °C, the pressure is increased by adding gas to the headspace until it is approximately 1035 kPa. At 150 °C, the pressure is increased to approximately 2070 kPa. Once the mixture reaches operating temperature, the pressure is increased to approximately 3450 kPa. It should be appreciated, that the temperature and pressure may fluctuate substantially from the initial levels during operation.

The initial reaction mixture is heated by the energy control system to at least 150 °C as the impeller 414 vigorously mixes or agitates the reaction mixture. The energy control system 416 includes one or more heat exchangers positioned inside or outside the reactor 402. It should be appreciated that the redox reaction is sufficiently exothermic and contributes heat to the reactor 402. The energy control system 416 can be used to heat or cool the reactor 402 and the reaction mixture inside depending on the circumstances. It should be appreciated that the same heat exchanger can be used to heat or cool the reactor 402 as desired or multiple heat exchangers can be used.

It should be appreciated that the energy control system 416 can be viewed as a collection of any number, type, or configuration of heat exchangers, heat sources, heat sinks and other energy transfer devices and components that add and/or extract heat from various streams, reactors, etc. For example, the energy control system 416 may include a supplemental heat source that is used to supply and/or remove heat from the heat exchanger using one or more heat exchange coils.

The impeller 414 is used to thoroughly and vigorously mix the reaction mixture and disperse the gas from the headspace into the reaction mixture. The impeller 414 can have any suitable design or configuration so long as it is capable of adequately mixing the gas in the headspace with the reaction mixture. In one embodiment, the impeller 414 includes two sets of blades. One set of blades is located at the bottom of the impeller 414, which is near the bottom of the reactor 402. These blades are positioned just above the sparger through which oxygen gas is injected into the reactor 402. The blades shear the oxygen gas to better mix it into the liquid. Another set of blades is positioned at the top of the reaction mixture. This set of blades propels the gas in the headspace into the reaction mixture. Both sets of blades are attached to a single shaft.

In another embodiment, the impeller 414 is a gas entrainment impeller. The gas is dispersed by impeller blades attached to a hollow shaft through which gases are continuously recirculated from the headspace of the reactor 402. The gas enters openings near the top of the shaft and is expelled through dispersion ports located at the tips of the impeller blades. The high speed rotation of the impeller blades creates a low pressure area at the tip. The pressure at the tip of the blades drops as the speed of the impeller 414 increases, thereby increasing the rate at which gas is dispersed from the headspace through the reaction mixture.

The reactor 402 can also include one or more baffles that enhance dispersion of the headspace gas as well as the general stirring of the reaction mixture. The transfer of gas is governed by the relative speed of the tips of the impeller 414 to the liquid phase, which reduces the pressure at the tips (i.e., creates a vacuum) of the impeller 414 and thereby draws gas into the reaction mixture. A baffle may be used to impede rotation of the liquid reaction mixture relative to the impeller 414. This may enhance the operation of the impeller 414. A baffle designed specifically for this purpose may be placed in the reactor 402. Alternatively, a cooling/heating coil and/or other structures that are integral or added to the reactor 402 may function as a baffle. In one embodiment, the cooling/heating coil has a serpentine shape.

The sensors 412 are used to measure one or more of the following parameters: temperature, pressure, or liquid level. The sensors 412 can be used to implement an automated control system or simply provide the operator with information about the status of the reactor 402.

The reactor 402 may include an emergency blowdown system. In one embodiment, the emergency blowdown system includes a large-diameter, high pressure pipe that runs from the reactor 402 to an emergency blowdown containment vessel. In the event of an emergency overheat/overpressure situation, the pipe will quickly empty the reactor 402 into the emergency blowdown containment vessel. The vessel is sized to receive all the contents of the reactor 402 without leaking anything to the surrounding environment.

The pressure and/or concentration of the gas in the headspace of the reactor 402 can be adjusted by releasing gas from the headspace. The gas can be released through a gas out port on the reactor 402. A significant amount of the gas exits the reactor 402 through the effluent. In one embodiment, the ratio of gas that exits through the effluent to gas that exits in other ways is approximately 0.5 to 1.5.

Once the reactor 402 reaches its operating temperature and pressure, it is ready to receive and oxidize the primary feedstock. The primary feedstock is fed into the reactor 402 and shortly thereafter the redox reaction reaches a steady operating state. At this point, the reaction mixture includes the primary feedstock, the initial start-up oxidizing acids, water, dissolved and entrained gases as well as various reaction products. The redox reaction can be indefinitely sustained at a steady state. Although conditions in the reactor 402 can vary significantly over time, they do not vary so much that the reaction is adversely affected.

In some respects, the start-up parameters of the reactor 402, such as the oxygen gas concentration in the headspace and the volume occupied by the reaction mixture, are maintained during operation. For example, the oxygen gas concentrations can be maintained at the levels described above during operation. Also, the reaction mixture can occupy the same volume of the reactor 402 as the initial reaction mixture. Thus, the volume amounts described above in connection with the initial reaction mixture apply equally to the reaction mixture during operation.

The pressure in the reactor 402 is maintained at a level that is sufficient to keep the reaction products of nitric acid in solution so that they can react with the oxygen to regenerate the nitric acid. In one embodiment, the pressure in the reactor 402 is maintained at at least approximately 2070 kPa, desirably, at least approximately 2410 kPa, or, suitably, at least approximately 2800 kPa. In another embodiment, the pressure in the reactor 402 is maintained at no more than approximately 6900 kPa, desirably, no more than approximately 6200 kPa, or, suitably, no more than approximately 5515 kPa. In yet another embodiment, the pressure in the reactor 402 is maintained at approximately 2070 kPa to 6900 kPa, desirably, approximately 2410 kPa to 6200 kPa, or, suitably, approximately 2800 kPa to 5515 kPa.

The pressure in the reactor 402 can be maintained by selectively adding oxygen gas 406, control gas 408, or recycled gas 410. If the concentration of oxygen in the reaction mixture is low, then oxygen gas 406 is added. However, if additional oxygen is not needed, then either the control gas 408 or the recycled gas 410 is added. It should be understood that the reaction generates gas that also contributes to the pressure inside the reactor 402. Due to the high operating pressure of the reactor 402, the oxygen gas 406, the control gas 408, and/or the recycled gas 410 may be supplied at pressures greater than 6900 kPa so that they will flow into the reactor 402.

The temperature of the reaction mixture is maintained at a level that prevents the nitric acid from decomposing, but encourages the rapid oxidation of the feedstock. The temperature is controlled with the energy control system 416 as described above. The temperature of the reaction mixture is maintained at no more than approximately 210 °C or, desirably, no more than approximately 205 °C. The temperature of the reaction mixture is also maintained at at least approximately 150 °C or, desirably, at least approximately 160 °C. Thus, the temperature of the reaction mixture is maintained at approximately 150 °C to approximately 210 °C or, desirably, approximately 160 °C to approximately 205 °C.

During operation, the impeller 414 is configured to disperse a sufficient amount of the oxygen gas from the headspace into the reaction mixture to facilitate oxidation of the feedstock and/or regeneration of the nitric acid. The oxygen can react with the nitric acid reduction products to form nitric acid without any processing outside of the reactor. The amount of nitric acid that is regenerated can vary. In one embodiment, at least a majority of the nitric acid is regenerated, desirably, at least 75% of the nitric acid is regenerated, or, suitably at least 90% of the nitric acid is regenerated.

The impeller 414 circulates the gas from the headspace through the reaction mixture so that the concentration of the gases in the reaction mixture is very similar to, if not the same as, the concentration of the gases that are dissolved or undissolved in the reaction mixture. This makes it possible to control the amount of oxygen gas supplied to the reaction mixture based on oxygen gas measurements taken in the headspace. In one embodiment, the concentration of dissolved and undissolved oxygen gas in the gaseous portion of the reaction mixture is within approximately 25% of the concentration of oxygen gas in the headspace, desirably, within approximately 10% of the concentration of oxygen gas in the headspace, or, suitably, within approximately 5% of the concentration of oxygen gas in the headspace.

The composition of the gas in the headspace may be adjusted to control the reaction products produced by the redox reaction. In one embodiment, the composition of gases inside the reactor meet the following parameters: oxygen has the concentration given above, carbon dioxide 5% - 25% by volume; carbon monoxide 2% - 10% by volume; nitrous oxide (N2O) 2% - 5% by volume with the remainder being Argon and/or Nitrogen as well as minor amounts of NOx and SOx as trace impurities.

The concentration of the oxidizing acids in the reaction mixture may be the same or similar to the concentrations given above. Additional acid may be added to the reactor from a make-up acid source or it may be added as part of the mixture that includes the feedstock.

Inside the reactor 402, the feedstock undergoes a complex, exothermic, redox process. The organic material in the feedstock reacts to form long and short chain hydrocarbons such as fatty acid alkyl esters, aromatic hydrocarbons, complex hydrocarbons, graphitic material, and the like.

An effluent stream may be continually extracted from the reactor 402 during operation. The effluent is a runny liquid that includes a liquid fraction (alternatively referred to a liquid component) and a solid fraction (alternatively referred to as a solid component). In one embodiment, the solid fraction is approximately 2 wt% to approximately 10 wt% of the effluent with the rest being the liquid fraction. The effluent includes dissolved and entrained gas.

The solid fraction is enriched with carbon containing materials and the liquid fraction is enriched with nitrogen containing materials. In one embodiment, the weight ratio of carbon to nitrogen in the solid component, on a dry basis, is at least 2, at least 4, at least 6, or at least 10, times the weight ratio of carbon to nitrogen in the liquid component.

The solid fraction includes hydrocarbon material such as fatty acid esters and non-hydrocarbon material such as fine graphitic material. The solid fraction is approximately one third hydrocarbon material and two thirds non-hydrocarbon material. The hydrocarbon material in the solid fraction can include at least 25 wt% fatty acid esters, at least 50 wt% fatty acid esters, or at least 75 wt% fatty acid esters. The fatty acid esters can be mono-alkyl esters of long chain fatty acids (C12-C22).

The hydrocarbon material can include alkyl esters of palmitic acid and stearic acid. In one embodiment, the hydrocarbon material include at least approximately 25 wt% of palmitic and stearic acid alkyl esters, at least approximately 35 wt% of palmitic and stearic acid alkyl esters, at least approximately 40 wt% of palmitic and stearic acid alkyl esters, at least approximately 45 wt% of palmitic and stearic acid alkyl esters, at least approximately 50 wt% of palmitic and stearic acid alkyl esters, desirably, at least approximately 55 wt% of palmitic and stearic acid alkyl esters, or, suitably, at least approximately 60 wt% of palmitic and stearic acid esters.

The hydrocarbon material can be used as a biofuel or as an additive for a biofuel. For example, the hydrocarbon material can be used as biodiesel or as an additive to biodiesel. The non-hydrocarbon material is carbon rich but takes the form of a fine graphite like material. The non-hydrocarbon material can be added to the soil as a supplement that promotes plant growth.

The pH of the effluent is the same as the reaction mixture. In one embodiment, the pH of the effluent is at least approximately 0.5, desirably, at least approximately 0.75, or, suitably, at least approximately 0.9. In another embodiment, the pH of the effluent is no more than approximately 2.0, desirably, no more than approximately 1.75, or, suitably, no more than approximately 1.5. In another embodiment, the pH of the effluent is approximately 0.5 to 2.0, desirably, approximately 0.75 to 1.75, or, suitably, approximately 0.9 to 1.5. In another embodiment, the pH of the effluent is approximately 1.3.

Upon exiting the reactor 402, the effluent may interact with the energy control system 416. The principle purpose of the energy control system 416 is to maintain the operating temperature of the reactor 402, although it could also be used to extract usable energy from the process. In one embodiment, the effluent passes through a heat exchanger that transfers heat from the effluent to the feedstock thereby pre-heating the feedstock and cooling the effluent. This helps conserve energy from the reactor 402.

It should be noted that any unreacted nitric acid in the reactor effluent can be removed by flashing it off before it is cooled below the boiling point of nitric acid. Also, any excess water may be flashed off in the energy control system. The need to flash or otherwise separate water from the effluent may be reduced by restricting the amount of water that is added to the feedstock.

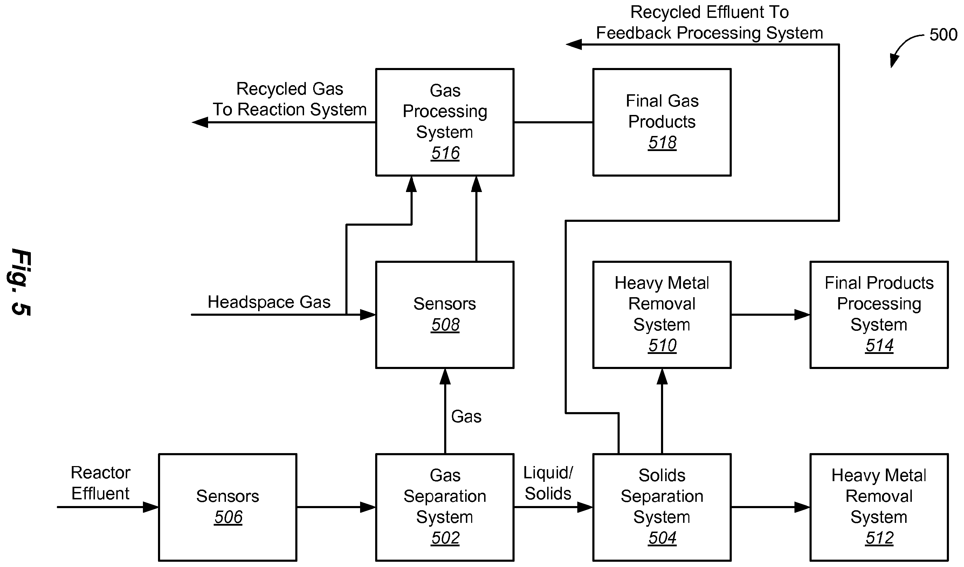

Turning to Figure 5, a block diagram of one embodiment of an effluent processing system 500 is shown. The effluent processing system 500 receives the effluent after it exits the energy control system 416. A number of sensors 506 may be used to measure parameters such as the pH and conductivity of the cooled effluent. This information can be used to control the amount of acids 210, 212 that are added to the mixing vessel 208. For example, the lower the pH of the effluent, the less acid 210, 212 that needs to be added to the mixing vessel 208.

The cooled effluent flows to the gas separation system 502 where the pressure is reduced to ambient to release the dissolved and entrained gases. The effluent can be vigorously agitated to facilitate release of the dissolved and entrained gases.

The gases may be vented to the atmosphere, recycled back to the reactor 402, or separated and captured. If the gases are recycled or separated and captured, then the gases from the effluent are combined with the gases from the headspace at either the sensors 508 or the gas processing system 516. The sensors 508 can be used to measure the oxygen concentration, temperature, and other parameters. The gas processing system 516 can be used to separate the gases. The oxygen and inert gases (argon, nitrogen, and the like) can be recycled back to the reactor 402. Any remaining gas can be moved to the final gas products 518 for venting, storing, packaging, shipping and/or disposal.

The liquid/solids stream from the gas separation system 502 enters the solids separation system 504 where the solid fraction is separated from the liquid fraction so that the liquid fraction can be recycled back to the feedstock processing system 104. The solids may make it difficult to recycle some of the effluent back to the reactor 402 without clogging or plugging the piping.

The solid fraction can be separated using any of a number of techniques and/or devices. Examples include mechanical separation techniques and devices such as a rotary drum vacuum filter, centrifuge, belt filter press, plate and frame press, vacuum bed, and the like. In one embodiment, the solids are filtered out of the effluent.

The liquid fraction from the separation system 504 is either recycled back to the feedstock processing system or processed to remove heavy metals in the heavy metal removal system 510. Heavy metals may be separated from the liquid fraction in a variety of ways. In one embodiment, the liquid fraction is allowed to sit for a sufficient period of time for the heavy metals to precipitate out of the solution.

While not wishing to be bound by theory, it is believed that the heavy metals are held in solution by organic esters such as fatty acid esters. As the esters slowly degrade, the heavy metals precipitate to the bottom of the solution. The heavy metals may also react with the chloride in the solution to produce heavy metal chloride salts that precipitate out of the solution.

In another embodiment, the heavy metals are removed using an ion exchange material or activated carbon. For example, the liquid fraction is passed through a packed column that contains the ion exchange material or the activated carbon. The heavy metals are absorbed by these materials to produce a cleaned liquid fraction. In yet another embodiment, ferric oxide may be added to the liquid fraction to facilitate precipitation of the heavy metals. Any combination of these techniques may also be used.

The heavy metals removal system 510 may be capable of removing arsenic, cadmium, cobalt, mercury, molybdenum, and/or selenium. In one embodiment, the heavy metals removal system 510 is capable of removing at least 80 wt% or at least 90 wt% of arsenic, cadmium, cobalt, mercury, molybdenum, and/or selenium.

In one embodiment, the heavy metals may be separated using a multistep process. For example, the heavy metals can be precipitated out of the liquid effluent, then the remainder of the heavy metals are separated using an ion exchange process. The precipitation step removes most of the arsenic, cadmium, cobalt, mercury, molybdenum, and selenium while the ion exchange process removes chromium and lead.

The cleaned liquid fraction from the heavy metal removal system 510 is mixed with ammonia in the final products processing system 514. The ammonia neutralizes the acids until it reaches a pH that makes it suitable for use as a fertilizer. The resulting liquid product contains a mixture of organic and inorganic materials that make it a very good fertilizer.

The amount of ammonia added to the cleaned liquid fraction may vary depending on the relevant soil conditions. For example, if the soil is alkaline, it may be desirable to apply slightly acidic fertilizer to neutralize the soil. In this example, ammonia may be added to bring the pH of the solution up to approximately 4.0 or approximately 4.5. If the soil is acidic, then it may be desirable to add enough ammonia to create a basic solution.

The solid fraction from the separation system 504 enters another heavy metal removal system 512 where the solid fraction is processed to remove most or all of the heavy metals. It should be appreciated that, in some embodiments, the heavy metal removal system 512 may be the same as the heavy metal removal system 510.

The heavy metals may be removed from the solid fraction in any of a number of ways. In one embodiment, the heavy metals are removed from the solid fraction using the cleaned liquid fraction. For example, a portion of the cleaned liquid fraction is mixed with the solid fraction to extract the heavy metals from the solid fraction. The resulting liquid is reprocessed through the heavy metal removal system 510 to isolate and eliminate the heavy metals. In another embodiment, the heavy metals are removed using a solvent extraction process that is capable of solvating the heavy metals.

As described above, the solid fraction can be divided up and used as a biofuel, fertilizer, and/or a soil amendment.

### Examples

The following examples are provided to further illustrate the disclosed subject matter. They should not be used to constrict or limit the scope of the claims in any way.

### Example 1

In this example, sewage was processed to produce fertilizer and/or otherwise treat the sewage to render it suitable to be discharged into the environment. The sewage was obtained from a sewage treatment plant and contained 5.2 wt% solids with the rest being almost entirely water. The solid particles in the sewage were suspended in the liquid so that the texture of the sewage resembled a readily pourable slurry.

The sewage was dewatered by mixing 75.71 liters of sewage with 1 liter of a flocculant solution and agitating the mixture until the solid particles in the sewage clustered or clumped together. The flocculant solution contained 10 ml of Core Shell 71307 cationic flocculant and 990 ml of water. The Core Shell 71307 flocculant was obtained from the Nalco Company located in Naperville, Illinois.

The liquid was separated from the mixture to yield 19.543 kg of dewatered sewage. The dewatered sewage contained 20.2 wt% solid material and the rest was water. It had a soft moldable texture. The dewatered sewage was fed into a reactor in the following manner.

The reactor was initially filled with a liquid mixture that included 1,000 ml water, 30 ml aqueous nitric acid solution (54 wt% acid), and 15 ml aqueous sulfuric acid solution (93 wt% acid). The pH of the liquid in the reactor was 1.0. The reactor was heated to about 180 °C and pressurized to about 4,826 kPa.

The headspace of the reactor was filled with 50% oxygen gas by volume. The reactor included a gas entrainment impeller that dispersed the headspace gases into the reaction mixture. The pressure was maintained by adding oxygen gas or air. Air was added unless the oxygen concentration in the headspace was low, then oxygen was added. If the pressure was high, gas was released from a valve at the top of the reactor.

During the start-up phase of the process, the dewatered sewage was mixed with an acid solution in a blender to produce a mixture having a pH of 1.0. The blender was used to comminute the solids in the feedstock to make it uniform. The feedstock included 175 gm dewatered sewage, 450 ml water, 15 ml aqueous nitric acid solution (54 wt% acid), and 7.5 ml aqueous sulfuric acid solution (93 wt% acid). This was fed into the reactor until it began to produce a steady stream of effluent material.

The process transitioned to a steady state phase when there was sufficient effluent produced to recycle a portion of it back to the beginning. The recycled effluent was added to the feedstock in place of the water that was used during the start-up phase. The amount of acids added to the feedstock was lowered since the effluent contained some acid. Enough acid was added, however, to bring the feedstock to a pH of 1.0. The result was that the feedstock included 175 gm dewatered sewage, 450 ml of recycled effluent (pH approximately 1.3), 10 ml aqueous nitric acid solution (54 wt% acid), and 4 ml aqueous sulfuric acid solution (93 wt% acid). The temperature of the recycled effluent was 50 to 70 °C.

The feedstock entered the reactor through two hydraulic rams that were alternately isolated from the high pressure reactor using valves. The valve between one hydraulic ram and the reactor was opened to allow the ram to feed the feedstock into the reactor while the valve between the other ram and the reactor was closed to allow it to be reloaded without depressurizing the reactor. This made it possible to feed a continuous supply of feedstock to the reactor without depressurizing the reactor.

The effluent was a runny liquid mixture that contained a significant amount of solids and had a steady state pH of 1.3. The solids had a tendency to clump together and/or stick to the equipment, which made it difficult to process.

The effluent also contained a significant amount of dissolved and/or entrained gas. Approximately half of the gas released by the reactor was dissolved and/or entrained in the effluent. The other half exited the reactor through a bleed off valve at the top of the reactor. The amount of gas that exited through the effluent was 775 liters and the amount of gas that exited through the valve at the top of the reactor was 780 liters. The gas that exited through the top of the reactor included gas that was released to reduce the pressure in the reactor and gas that was slowly released across an oxygen sensor that was used to monitor the oxygen concentration in the reactor.

After exiting the reactor, the effluent was cooled and the pressure was reduced to atmospheric pressure. This released much of the dissolved and entrained gas, which was then collected. The degassed effluent was then subjected to vacuum filtration to separate the liquid from the solids.

The filtered liquid was divided and a portion was recycled back to the beginning of the process as described above. The remaining liquid was mixed with an aqueous ammonia solution (24% ammonia) until the pH of the solution reached 4.5. The ammonia reacted with the acids in the effluent to produce ammonium salts that can be used as fertilizer.

Table 1 below shows the composition of the feedstock, liquid effluent, and solid effluent. The composition of the liquid effluent was tested before ammonia was added. The composition was determined using EPA methods 3050A (digestion) and 6010 (determination).

**Table 1 - Effluent composition**

| | Minimum Detectable Level (MDL) (mg/kg) | Feedstock (mg/kg) (dry basis) | Effluent Liquids (mg/kg) | Effluent Solids (mg/kg) (dry basis) |
|---|---|---|---|---|
| Heavy Metals | | | | |
| Arsenic | 0.76 | 12.5 | 3.0 | 19.0 |
| Cadmium | 0.14 | 2.5 | 1.0 | 4.9 |
| Chromium | 0.13 | 22.1 | 19.6 | 238.5 |
| Cobalt | 0.22 | 1.0 | 0.5 | 1.9 |
| Copper | 0.39 | 86.7 | 34.7 | 171.8 |
| Mercury | 0.003 | - | 016 | - |
| Molybdenum | 0.15 | 3.2 | 1.1 | 27.5 |
| Nickel | 0.31 | 9.2 | 13.9 | 65.0 |
| Lead | 2.31 | 10.5 | <MDL | 72.8 |
| Selenium | 1.12 | 0.5 | <MDL | 2.9 |
| Zinc | 0.54 | 137.5 | 67.3 | 172.2 |
| Plant Nutrients | | | | |
| Total Nitrogen Atoms | 57 | 8,269 | 12,579 | 9,725 |
| Phosphorous | 3.6 | 2,559 | 627 | 10,750 |
| Phosphorous Pentoxide (P205) | - | 5,886 | 1,441 | 24,725 |
| Potassium | 29.6 | 382 | 113 | 797 |
| Potassium Oxide (K20) | - | 458 | 135 | 956 |
| Sulfur | 10.6 | 1,913 | 7,199 | 54,220 |
| Calcium | 12.5 | 6,415 | 640 | 51,210 |
| Magnesium | 4.2 | 678 | 315 | 975 |
| Iron | 64.3 | 1,821 | 192 | 13,090 |
| Manganese | 1.8 | 22 | 11 | 41.3 |
| Boron | 0.12 | 6.1 | 0.5 | 40.2 |
| Sodium | 13.2 | 726 | 292 | 1,058 |
| Chloride | 0.75 | 824 | 404 | 225 |
| Total Carbon Atoms | 30 | 97,500 | 30,300 | 290,500 |
| Carbon/Nitrogen Ratio | - | 11.79 | 2.41 | 29.87 |

The process conditions were such that the dewatered sewage reacted to produce valuable products. The types of acids used and the relative concentrations of each were sufficient to oxidize the sewage to produce valuable products, but not so much that the sewage was completely oxidized to carbon dioxide, nitrogen gas, and water. For example, the process would produce fewer desirable reaction products if greater amounts of nitric acid were used.

The effluent can be used as a fertilizer and/or other soil amendment. The liquid effluent may be sprayed on the soil as a liquid fertilizer and the solid effluent may be spread on or worked into the soil. The pH of the liquid effluent may be adjusted depending on the condition of the soil. For example, the pH may be somewhat acidic if the liquid effluent will be applied to alkaline soil. In the alternative, the pH may be adjusted to be basic if the liquid will be applied to acidic soil.

The process was run for ten hours and consumed approximately 7920 gm of dewatered sewage, 475 ml of aqueous nitric acid (54 wt% acid), 143.5 ml of aqueous sulfuric acid solution (93 wt% acid), and 1,040 liters of oxygen gas. The process produced approximately 9,060 ml of liquid effluent and 474 gm of solids (on a dry basis). A minor amount of effluent remained in the process equipment and was not included in the preceding amounts. The process also produced 1,555 liters of gas. Approximately half of the gas exited the reactor through the headspace and the other half was dissolved or entrained in the effluent.

The temperature and pressure in the reactor fluctuated somewhat depending on the reaction conditions. During the steady state phase of the process, the temperature in the reactor was maintained at approximately 180 °C although it fluctuated at times from 150 °C to 200 °C. The pressure in the reactor was maintained at approximately 4,826 kPa plus or minus 200 kPA.

### Example 2

In this example, various methods and materials were tested for removing heavy metals from the liquid effluent. The tests were especially focused on removing heavy metals such as arsenic, cadmium, chromium, mercury, lead, and selenium. The other heavy metals tested are either of less concern or may even be considered micronutrients.

The liquid effluent was prepared using the method described in Example 1 and divided into six samples. The samples were processed as follows. In Sample 1, the liquid effluent was allowed to sit undisturbed in a flask for about a month. The heavy metals separated to the bottom of the flask and the remaining liquid was drawn off the top. In Samples 2-5, the liquid effluent was mixed with the hydrated ion exchange beads shown in Table 2. In each sample, 100 ml of liquid effluent was mixed with 1 gm of ion exchange beads and gently shaken. In Sample 6, 100 ml of liquid effluent was mixed with 1 gm of ferric oxide (Fe₂O₃) and gently shaken. The composition of the resulting liquid from each sample was then tested.

**Table 2 - Ion exchange beads**

| Sample | Ion Exchange Beads |
|---|---|
| Sample 2 | XUR-1525-L10-018 from the Dow Chemical Company |
| Sample 3 | XUR-1525-L10-019 from the Dow Chemical Company |
| Sample 4 | XUR-1525-L10-020 from the Dow Chemical Company |
| Sample 5 | XUR-1525-L10-021 from the Dow Chemical Company |

The composition of the liquid samples produced from each test are shown in Table 3. One notable result is Sample 1. The passive precipitation process removed arsenic, cadmium, mercury, and selenium to levels that are undetectable. While not wishing to be bound by theory, it is believed that the heavy metals form a complex with organic esters that keep the heavy metals in solution. The esters break down over time causing the heavy metals to drop out of solution. The ion exchange beads used in Sample 5 show promise for removing the chromium and lead from the liquid effluent. It should also be noted that the plant nutrients were not significantly affected in any of the tested samples.

**Table 3 - Heavy metal removal**

| | MDL (mg/kg) | Sample 1 | Sample 1 (precip) | Sample 2 | Sample 3 | Sample 4 | Sample 5 | Sample 6 |
|---|---|---|---|---|---|---|---|---|
| Heavy Metals | | | | | | | | |
| Arsenic | 0.76 | <MDL | 14.7 | <MDL | <MDL | <MDL | <MDL | <MDL |
| Cadmium | 0.14 | <MDL | <MDL | <MDL | <MDL | <MDL | <MDL | <MDL |
| Chromium | 0.13 | 14.9 | 18.2 | 13.9 | 10.8 | 10.7 | 9.8 | 11.9 |
| Cobalt | 0.22 | <MDL | <MDL | <MDL | <MDL | <MDL | <MDL | <MDL |
| Copper | 0.39 | 32.7 | 78.9 | 32.2 | 28.5 | 27.1 | 27.2 | 28.4 |
| Mercury | 0.003 | <MDL | 18.313 | <MDL | <MDL | <MDL | <MDL | <MDL |
| Molybdenum | 0.15 | <MDL | 41.8 | <MDL | <MDL | <MDL | <MDL | <MDL |
| Nickel | 0.31 | 11.0 | 2.9 | 11.2 | 11.2 | 11.1 | 10.8 | 11.0 |
| Lead | 2.31 | 3.4 | 82.8 | 4.0 | 4.0 | 3.9 | 3.6 | 3.2 |
| Selenium | 1.12 | <MDL | 41.4 | <MDL | <MDL | <MDL | 1.3 | 3.4 |
| Zinc | 0.54 | 64.0 | 15.1 | 50.0 | 65.0 | 64.4 | 62.4 | 58.1 |
| Plant Nutrients | | | | | | | | |
| Total Nitrogen Atoms | 57 | 11,643 | 3,989 | 12,296 | 12,350 | 12,257 | 12,058 | 12,529 |
| Phosphorous | 3.6 | 525 | 522 | 364 | 476 | 484 | 405 | 368 |
| Phosphorous Pentoxide (P205) | - | 1,207 | 1,200 | 837 | 1,095 | 1,113 | 932 | 847 |
| Potassium | 29.6 | 114 | 41 | 113 | 126 | 112 | 104 | 114 |
| Potassium Oxide (K20) | - | 136 | 49 | 135 | 151 | 135 | 124 | 136 |
| Sulfur | 10.6 | 6,698 | 181,500 | 6,572 | 6,530 | 6,708 | 6,547 | 6,721 |
| Calcium | 12.5 | 576 | 192,800 | 492 | 455 | 450 | 436 | 1,203 |
| Magnesium | 4.2 | 303 | 89 | 295 | 310 | 307 | 298 | 366 |
| Iron | 64.3 | 122 | 633 | 86 | 81 | 93 | 53 | 102 |
| Manganese | 1.8 | 4.0 | <MDL | 2.1 | 4.0 | 3.9 | 3.5 | 8.9 |
| Boron | 0.12 | 0.9 | 3.5 | 0.9 | 0.9 | 0.9 | 0.7 | 0.9 |
| Sodium | 13.2 | 271 | 107 | 271 | 277 | 273 | 265 | 275 |
| Total Carbon Atoms | 30 | 28,900 | 54,700 | 29,700 | 28,900 | 28,500 | 29,600 | 29,700 |
| Carbon/Nitro gen Ratio | - | 2.48 | 13.71 | 2.42 | 2.34 | 2.33 | 2.45 | 2.37 |

### Example 3

In this example, the composition of the solid organic materials produced by the process was tested. The sewage was obtained and dewatered in the manner described in Example 1 except that it was dewatered to 17 wt% solid content. The reactor was initially filled with a liquid mixture that included 1,450 recycled effluent having a pH of 1.3 (from a previous run), 8.5 ml aqueous nitric acid solution (54 wt% acid), and 21.5 ml aqueous sulfuric acid solution (93 wt% acid). The pH of the liquid in the reactor was 1.0. The reactor was heated to about 180 °C and pressurized to about 4,826 kPa.

The headspace of the reactor was filled with 50% oxygen gas by volume. The reactor included a gas entrainment impeller that dispersed the headspace gases into the reaction mixture. The pressure was maintained by adding oxygen gas or air. Air was added unless the oxygen concentration in the headspace was low, then oxygen was added. If the pressure was high, gas was released from a valve at the top of the reactor.

The dewatered sewage was mixed with the recycled liquid fraction of the effluent (if this was at start-up, the recycled liquid fraction was obtained from a previous run) in a blender to produce a mixture having a pH of 1.0. The blender was used to comminute the solids in the feedstock to make it uniform. The feedstock included 175 gm dewatered sewage, 450 ml recycled liquid effluent, 3.5 ml aqueous nitric acid solution (54 wt% acid), and 9.0 ml aqueous sulfuric acid solution (93 wt% acid). This was fed into the reactor.

The feedstock entered the reactor through two hydraulic rams that were alternately isolated from the high pressure reactor using valves. The valve between one hydraulic ram and the reactor was opened to allow the ram to feed the feedstock into the reactor while the valve between the other ram and the reactor was closed to allow it to be reloaded without depressurizing the reactor. This made it possible to feed a continuous supply of feedstock to the reactor without depressurizing the reactor.

The effluent was a runny liquid mixture that contained a significant amount of solids and had a steady state pH of 1.3. The solids had a tendency to clump together and/or stick to the equipment, which made it difficult to process.

The effluent also contained a significant amount of dissolved and/or entrained gas. Approximately half of the gas released by the reactor was dissolved and/or entrained in the effluent. The other half exited the reactor through a bleed off valve at the top of the reactor. The amount of gas that exited through the effluent was 775 liters and the amount of gas that exited through the valve at the top of the reactor was 780 liters. The gas that exited through the top of the reactor included gas that was released to reduce the pressure in the reactor and gas that was slowly released across an oxygen sensor that was used to monitor the oxygen concentration in the reactor.

After exiting the reactor, the effluent was cooled and the pressure was reduced to atmospheric pressure. This released much of the dissolved and entrained gas, which was then collected. The degassed effluent was then subjected to vacuum filtration to separate the liquid from the solids.

The filtered liquid was divided and a portion was recycled back to the beginning of the process as described above. The remaining liquid was mixed with an aqueous ammonia solution (24% ammonia) until the pH of the solution reached 4.5. The ammonia reacted with the acids in the effluent to produce ammonium salts that can be used as fertilizer.

The organic materials in the solid component of the effluent were extracted using a solvent and analyzed. The results are shown in Table 4 below. The materials listed in Table 4 represent 93% of the amount of the total organic materials identified. The remaining 7% are not listed due to their low concentrations.

**Table 4 - Composition of the organics in the solid component of the effluent**

| Material | Wt% | | Material | Wt % |
|---|---|---|---|---|
| Methyl palmitate (Hexadecanoic acid, methyl ester) | 34.665 | | 8-Octadecenoic acid, methyl ester | 1.137 |
| Methyl stearate (Octadecanoic acid, methyl ester) | 27.541 | | 8,11-Octadecadienoic acid, methyl ester | 0.758 |

| Material | Wt % | | Material | Wt % |
|---|---|---|---|---|
| Methyl myristate (Tetradecanoic acid, methyl ester) | 5.954 | | Methyl 14-methylpalmitate (14-methylhexadecanoic acid, methyl ester) | 1.283 |
| Methyl oleate ((Z)-9-Octadecenoic acid, methyl ester) | 4.973 | | Dimethyl azelate (Nonanedioic acid dimethyl ester) | 0.379 |
| Methyl pentadecanoate (Pentadecanoic acid, methyl ester) | 3.201 | | Methyl caprate (Decanoic acid, methyl ester) | 0.357 |
| Octadecanoic acid, 10-oxo-, methyl ester | 2.576 | | 3-Hydroxyoctadecanoic acid, methyl ester | 0.357 |
| Methyl icosanoate (Eicosanoic acid, methyl ester) | 2.241 | | Methyl isopalmitate (14-Methylpentadecanoic acid, methyl ester) | 0.335 |
| Methyl laurate (Dodecanoic acid, methyl ester) | 1.862 | | 3-Hydroxydodecanoic acid, methyl ester | 0.323 |
| Methyl heptadecanoate (Heptadecanoic acid, methyl ester) | 1.438 | | Dodecyl alcohol (1-Hydroxydodecane) | 0.312 |
| Methyl docosanoate (Docosanoic acid, methyl ester) | 1.427 | | Linolelaidic acid, methyl ester (delta 9-trans 12-trans Octadecadienoic acid, methyl ester) | 0.301 |
| 12-Methyltetradecanoic acid, methyl ester | 1.249 | | Methyl benzoate | 0.290 |
| | | | Total | 93% |

The results show that the organic materials in the solid fraction of the effluent are primarily made up of mono-alkyl esters of long chain fatty acids (C12-C20). These materials are valuable and can be used for biodiesel, biolubricants, and the like. The liquid fraction of the effluent included a de minimis amount of organic material.

### Example 4

In this example, the process was run a number of times using only sulfuric acid and one time using a mixture of sulfuric and nitric acid. The run with nitric acid was used for comparison purposes with the other runs. The feed material was sewage material obtained from a sewage treatment plant. The sewage material included approximately 4.5% to 5.5% solids with the rest being almost entirely water. The solid particles in the sewage were suspended in the liquid so that the texture of the sewage resembled a readily pourable slurry. The sewage material was not dewatered, but it was comminuted in a blender to make the solids roughly uniform in size.

Each run was performed as a batch run. The reactor was heated to about 180 °C and pressurized to about 5515 kPa. The sewage material was mixed with the acid and then fed into the reactor using a hydraulic ram. The pH of the mixture just before entering the reactor was 1.0. The amount of each material is shown in Table 5 below.

**Table 5 - Run parameters**

| | Feed (mL) | Sulfuric Acid (mL) (93 wt% acid) | Nitric Acid (mL) (54 wt% acid) | Pressure (kPa) | Temp (C) | pH of Effluent | Reaction time |
|---|---|---|---|---|---|---|---|
| Run 1 | 1300 | 4.5 | 0 | 5515 | 180 | 1.3 | 24 |
| Run 2 | 1300 | 12 | 0 | 5515 | 180 | 1.3 | 18 |
| Run 3 | 1150 | 9 | 6 | 5515 | 180 | 1.3 | 8 |
| Run 4 | 1150 | 12 | 0 | 5515 | 180 | 1.3 | 18 |

Oxygen gas was bubbled into the reactor at a rate of 1.5L/min for the duration of the reaction. The concentration of oxygen in the reactor was not measured, but the amount that was added ensured that it was an oxygen rich environment. The oxygen gas entered the reactor through a sparger positioned at the bottom of the reactor. The reactor included an impeller that rotates and creates a vortex which draws the gas from the headspace down into the reaction mixture. The pressure was maintained at the desired level by adding air to the reactor or releasing gas from the headspace.

The results showed that the effluent from the run that included nitric acid is preferable to effluent from the runs that included only sulfuric acid. The effluent from the sulfuric only runs had cellulosic material in it and larger particle sizes. The large particle sizes made it easier to filter the solids from the effluent, but the presence of cellulosic material was a drawback. The effluent from run that included nitric acid was a runny liquid mixture that contained a significant amount of small particle solids and very little, if any, cellulose material. The organic material was broken down further by the nitric acid making it better suited for use as a soil amendment or biofuels.

The nitric acid also increased the reaction rate and throughput of the reactor as shown by the reaction times given in Table 5. The nitric acid resulted in a more complete reaction as evidenced by the texture and physical properties of the effluent and did so in less than half the time of the sulfuric acid only runs. The faster reaction time was reflected in the amount of heat produced by each run. The nitric acid run produced significantly more heat in less time than the sulfuric acid runs.

### Illustrative Arrangements

Reference is made in the following to a number of illustrative arrangements of the disclosed subject matter. The following arrangements illustrate only a few selected arrangements that may include one or more of the various features, characteristics, and advantages of the disclosed subject matter. Accordingly, the following arrangements should not be considered as being comprehensive of all of the possible arrangements.

The concepts and aspects of one arrangement may apply equally to one or more other arrangements or may be used in combination with any of the concepts and aspects from the other arrangements. Any combination of any of the disclosed subject matter is contemplated.

In one arrangement, a method comprises feeding waste material into a reactor that includes a reaction mixture, the waste material being at least part of the reaction mixture. The waste material is reacted with sulfuric acid in the reactor and the reaction mixture includes no more than approximately 7.5 wt% acid.

In another arrangement, the method comprises feeding waste material into a reactor and reacting the waste material with sulfuric acid in the reactor to produce an effluent. The effluent includes a solid component and a liquid component and the weight ratio of carbon to nitrogen in the solid component, on a dry basis, is at least two times the weight ratio of carbon to nitrogen in the liquid component.

In another arrangement, the method comprises reacting waste material with an oxidizing acid in a reactor to produce a first effluent, separating solids from the first effluent to produce a liquid effluent, and separating heavy metals from the liquid effluent.

The waste material may be any organic waste material. The waste material can have an organic content of at least 25 wt%, at least 50 wt%, or at least 75 wt% on a dry basis. The waste material can include sewage material such as dewatered sewage, sewage sludge, farm animal waste, or fruit and vegetable waste such as potato skins and the like. The waste material may be combined with recycled effluent from the reactor before the waste material enters the reactor. Additional acid may be combined with the waste material and recycled effluent before the waste material enters the reactor.

The acid may be combined with the waste material before the waste material enters the reactor. A portion of the effluent from the reactor may be recycled back to the reactor. The sulfuric acid and/or nitric acid may be combined with the waste material and/or recycled effluent before the waste material enters the reactor. The temperature in the reactor may be maintained at no more than approximately 210 °C and the pressure in the reactor may be maintained at at least 2070 kPa or at least 2800 kPa. The gas in the headspace of the reactor may be dispersed into the reaction mixture with an impeller or like device.

Oxygen gas may be supplied to the reactor to further facilitate the reaction. The concentration of dissolved and entrained gas in the gaseous portion of the reaction mixture may be maintained within approximately 25% of the concentration of oxygen gas in the headspace of the reactor. The gas in the headspace of the reactor may comprise at least 25 volume percent oxygen gas or at least 40 volume percent oxygen gas.

The solids may be separated from the effluent to produce a liquid effluent. The solids may be separated from the effluent by filtering the effluent. The heavy metals may be separated from the liquid component of the effluent. At least approximately 80 wt% of arsenic, cadmium, cobalt, mercury, molybdenum, and/or selenium may be separated from the liquid component of the effluent.

The reaction mixture may include an oxidizing acid such as sulfuric acid and/or nitric acid. The reaction mixture may include no more than approximately 5 wt% acid or no more than approximately 3 wt% acid. The reaction mixture may include no more than approximately 5 wt% sulfuric acid or no more than approximately 3 wt% sulfuric acid. The reaction mixture may include sulfuric acid, nitric acid, or some other oxidizing acid. The weight ratio of sulfuric acid to nitric acid can at least approximately 0.5, at least approximately 0.75, at least approximately 1, or at least approximately 1.5. The pH of the reaction mixture may be approximately 0.5 to 2.0, approximately 0.75 to 1.75, or approximately 0.9 to 1.5.

The heavy metals may be separated form the liquid effluent by precipitating the heavy metals from the liquid effluent. The heavy metals can also be separated form the liquid effluent by contacting the liquid effluent with an ion exchange material or activated carbon. The heavy metals can also be separated from the liquid effluent by adding ferric oxide to the liquid effluent. The solids can be separated from the first effluent by filtering the effluent.

At least approximately 80 wt% or approximately 90 wt% of arsenic, cadmium, cobalt, mercury, molybdenum, and/or selenium may be separated from the liquid effluent. The weight ratio of carbon to nitrogen in the solid component, on a dry basis, may be more than four times, five times, or six times the weight ratio of carbon to nitrogen in the liquid component.

The terms recited in the claims should be given their ordinary and customary meaning as determined by reference to relevant entries in widely used general dictionaries and/or relevant technical dictionaries, commonly understood meanings by those in the art, etc., with the understanding that the broadest meaning imparted by any one or combination of these sources should be given to the claim terms (e.g., two or more relevant dictionary entries should be combined to provide the broadest meaning of the combination of entries, etc.) subject only to the following exceptions: (a) if a term is used in a manner that is more expansive than its ordinary and customary meaning, the term should be given its ordinary and customary meaning plus the additional expansive meaning, or (b) if a term has been explicitly defined to have a different meaning by reciting the term followed by the phrase "as used herein shall mean" or similar language (e.g., "herein this term means," "as defined herein," "for the purposes of this disclosure the term shall mean," etc.).

References to specific examples, use of "i.e.," use of the word "invention," etc., are not meant to invoke exception (b) or otherwise restrict the scope of the recited claim terms. Other than situations where exception (b) applies, nothing contained herein should be considered a disclaimer or disavowal of claim scope.

The subject matter recited in the claims is not coextensive with and should not be interpreted to be coextensive with any particular embodiment, feature, or combination of features shown herein. This is true even if only a single embodiment of the particular feature or combination of features is illustrated and described herein. Thus, the appended claims should be given their broadest interpretation in view of the prior art and the meaning of the claim terms.

As used herein, spatial or directional terms, such as "left," "right," "front," "back," and the like, relate to the subject matter as it is shown in the drawings. However, it is to be understood that the described subject matter may assume various alternative orientations and, accordingly, such terms are not to be considered as limiting.

Articles such as "the," "a," and "an" can connote the singular or plural. Also, the word "or" when used without a preceding "either" (or other similar language indicating that "or" is unequivocally meant to be exclusive - e.g., only one of x or y, etc.) shall be interpreted to be inclusive (e.g., "x or y" means one or both x or y).

The term "and/or" shall also be interpreted to be inclusive (e.g., "x and/or y" means one or both x or y). In situations where "and/or" or "or" are used as a conjunction for a group of three or more items, the group should be interpreted to include one item alone, all of the items together, or any combination or number of the items. Moreover, terms used in the specification and claims such as have, having, include, and including should be construed to be synonymous with the terms comprise and comprising.

Unless otherwise indicated, all numbers or expressions, such as those expressing dimensions, physical characteristics, etc. used in the specification (other than the claims) are understood as modified in all instances by the term "approximately." At the very least, and not as an attempt to limit the application of the doctrine of equivalents to the claims, each numerical parameter recited in the specification or claims which is modified by the term "approximately" should at least be construed in light of the number of recited significant digits and by applying ordinary rounding techniques.

All ranges disclosed herein are to be understood to encompass and provide support for claims that recite any and all subranges or any and all individual values subsumed therein. For example, a stated range of 1 to 10 should be considered to include and provide support for claims that recite any and all subranges or individual values that are between and/or inclusive of the minimum value of 1 and the maximum value of 10; that is, all subranges beginning with a minimum value of 1 or more and ending with a maximum value of 10 or less (e.g., 5.5 to 10, 2.34 to 3.56, and so forth) or any values from 1 to 10 (e.g., 3, 5.8, 9.9994, and so forth).

## Claims

1. A method for treating a feedstock that includes organic material comprising:
reacting an organic feedstock in a reactor to form an effluent, the organic feedstock being part of a reaction mixture that includes sulfuric acid and nitric acid, with the sulfuric acid being added to achieve a concentration in the reaction mixture, excluding solids, of no more than approximately 5wt%, and with the nitric acid being added to achieve a concentration in the reaction mixture, excluding solids, of 0.05wt% to 5wt%;
supplying oxygen gas to the reactor;
maintaining a temperature in the reactor that is at least approximately 150°C and at no more than approximately 210°C;
separating the effluent into a solid fraction and a liquid fraction;
separating heavy metals from the liquid fraction.

2. The method of claim 1 wherein separating the heavy metals from the liquid fraction includes precipitating the heavy metals from the liquid fraction.

3. The method of claim 1 wherein separating the heavy metals from the liquid fraction includes contacting the liquid fraction with an ion exchange material and/or activated carbon.

4. The method of claim 1 comprising separating at least 80wt% of arsenic, cadmium, cobalt, mercury, molybdenum, and/or selenium from the liquid fraction.

5. The method of claim 1 wherein the solid fraction includes hydrocarbon material and wherein the hydrocarbon material includes at least 25wt% fatty acid esters.

6. The method of claim 1 wherein the reaction mixture, excluding solids, includes no more than 7.5 wt% of the total of the sulfuric acid and the nitric acid.

7. The method of claim 1 wherein the weight ratio of the sulfuric acid to the nitric acid when added to the reaction mixture is at least approximately 1.

8. The method of claim 1 wherein the feedstock includes sewage material.

9. The method of claims 1 comprising maintaining a pressure in the reactor of at least 2070 kPa.

10. The method of claim 1 wherein the pH of the reaction mixture is approximately 0.5 to 2.0.

11. The method of claim 1 comprising recycling a portion of the effluent back to the reactor.

## Patentansprüche

1. Verfahren zum Behandeln eines Rohstoffs, der organisches Material enthält, das Folgendes beinhaltet:
Zurreaktionbringen eines organischen Rohstoffs in einem Reaktor zum Bilden eines Abwassers, wobei der organische Rohstoff Teil eines Reaktionsgemischs ist, das Schwefelsäure und Salpetersäure enthält, wobei die Schwefelsäure zugegeben wird, um eine Konzentration in dem Reaktionsgemisch, ausschließlich Feststoffen, von maximal etwa 5 Gew.-% zu erzielen, und wobei die Salpetersäure zugegeben wird, um eine Konzentration in dem Reaktionsgemisch, ausschließlich Feststoffen, von 0,05 Gew.-% bis 5 Gew.-% zu erzielen;
Zuführen von Sauerstoffgas zu dem Reaktor;
Halten einer Temperatur in dem Reaktor, die wenigstens etwa 150°C und höchstens etwa 210°C beträgt;
Trennen des Abwassers in eine feste Fraktion und eine flüssige Fraktion;
Abscheiden von Schwermetallen von der flüssigen Fraktion.

2. Verfahren nach Anspruch 1, wobei das Abscheiden der Schwermetalle von der flüssigen Fraktion das Ausfällen der Schwermetalle von der flüssigen Fraktion beinhaltet.

3. Verfahren nach Anspruch 1, wobei das Abscheiden der Schwermetalle von der flüssigen Fraktion das Inkontaktbringen der flüssigen Fraktion mit einem Ionenaustauschmaterial und/oder Aktivkohle beinhaltet.

4. Verfahren nach Anspruch 1, das das Abscheiden von wenigstens 80 Gew.-% Arsen, Cadmium, Cobalt, Quecksilber, Molybdän und/oder Selen von der flüssigen Fraktion beinhaltet.

5. Verfahren nach Anspruch 1, wobei die feste Fraktion Kohlenwasserstoffmaterial enthält und wobei das Kohlenwasserstoffmaterial wenigstens 25 Gew.-% Fettsäureester beinhaltet.

6. Verfahren nach Anspruch 1, wobei das Reaktionsgemisch, ausschließlich Feststoffen, maximal 7,5 Gew.-% der Gesamtheit von Schwefelsäure und Salpetersäure beinhaltet.

7. Verfahren nach Anspruch 1, wobei das Gewichtsverhältnis zwischen Schwefelsäure und Salpetersäure bei Zugabe zu dem Reaktionsgemisch wenigstens etwa 1 beträgt.

8. Verfahren nach Anspruch 1, wobei das Rohmaterial Abfallmaterial beinhaltet.

9. Verfahren nach Anspruch 1, das das Halten eines Drucks im Reaktor von wenigstens 2070 kPa beinhaltet.

10. Verfahren nach Anspruch 1, wobei der pH-Wert des Reaktionsgemischs etwa 0,5 bis 2,0 beträgt.

11. Verfahren nach Anspruch 1, das das Recyclieren eines Teils des Abwassers zurück in den Reaktor beinhaltet.

## Revendications

1. Procédé de traitement d'une charge d'alimentation qui inclut des matières organiques, comprenant les opérations consistant à :
faire réagir une charge d'alimentation organique dans un réacteur pour former un effluent, la charge d'alimentation organique faisant partie d'un mélange réactionnel qui inclut l'acide sulfurique et l'acide nitrique, l'acide sulfurique étant ajouté pour atteindre une concentration dans le mélange réactionnel, à l'exclusion des solides, ne dépassant pas plus de 5 % par poids approximativement, et l'acide nitrique étant ajouté pour atteindre une concentration dans le mélange réactionnel, à l'exclusion des solides, allant de 0,05 % par poids à 5 % par poids ;
fournir de l'oxygène gazeux au réacteur ;
maintenir une température dans le réacteur qui est au moins de 150°C approximativement et ne dépasse pas 210°C approximativement ;
séparer l'effluent en une fraction solide et une fraction liquide ;
séparer les métaux lourds de la fraction liquide.

2. Procédé selon la revendication 1, la séparation des métaux lourds de la fraction liquide incluant la précipitation des métaux lourds de la fraction liquide.

3. Procédé selon la revendication 1, la séparation des métaux lourds de la fraction liquide incluant la mise en contact de la fraction liquide avec une matière à échange ionique et / ou du charbon actif.

4. Procédé selon la revendication 1, comprenant la séparation d'au moins 80 % par poids d'arsenic, de cadmium, de cobalt, de mercure, de molybdène et / ou de sélénium de la fraction liquide.

5. Procédé selon la revendication 1, la fraction solide incluant des matières d'hydrocarbures et les matières d'hydrocarbures incluant au moins 25 % par poids d'esters d'acides gras.

6. Procédé selon la revendication 1, le mélange réactionnel, à l'exclusion des solides, n'incluant pas plus de 7,5 % par poids du total de l'acide sulfurique et de l'acide nitrique.

7. Procédé selon la revendication 1, le rapport en poids de l'acide sulfurique à l'acide nitrique, quand ils sont ajoutés au mélange réactionnel, étant au moins de 1 approximativement.

8. Procédé selon la revendication 1, la charge d'alimentation incluant des matières d'eaux usées.

9. Procédé selon la revendication 1, comprenant le maintien d'une pression dans le réacteur d'au moins 2070 kPa.

10. Procédé selon la revendication 1, le pH du mélange réactionnel étant de 0,5 à 2,0 approximativement.

11. Procédé selon la revendication 1, comprenant le recyclage d'une portion de l'effluent en retour vers le réacteur.
